# EUROPEAN PATENT SPECIFICATION

(11) **EP 0 968 906 B1**
(45) Date of publication and mention of the grant of the patent: **07.05.2003**
(21) Application number: 99202145.1
(22) Date of filing: 01.07.1999
(51) Int. Cl.: B62D 53/08

(54) **Tractor with an additional axle for a tractor - trailer combination**
Traktor mit einer Zusatzachse für Traktoranhänger- Kombination
Tracteur avec un axe supplémentaire pour ensemble tracteur-remorque

(30) Priority: 02.07.1998 NL 1009542
(43) Date of publication of application: 05.01.2000
(73) Proprietor: Weweler Nederland B.V., 7332 AP Apeldoorn (NL)
(72) Inventor: Aalderink, Derk Geert, 7245 NV Laren (NL); Zantinge, Johan Michiel, 6991 HK Rheden (NL)
(74) Representative: Iemenschot, Johannes Andreas, Ir.

(56) References cited:
- GB-A- 954 262
- GB-A- 2 116 924

## Description

The invention relates to a tractor for a tractor/semi-trailer combination, comprising a chassis, front wheels, and rear wheels mounted on a rear axle, and further comprising an auxiliary unit which is fitted at the rear of the tractor and has an additional axle provided with at least one wheel for increasing the bearing capacity of the tractor, which auxiliary unit comprises a frame which extends in the longitudinal direction of the tractor, is connected to the tractor at the front and bears the additional axle at the rear, a fifth wheel plate being mounted on the frame of the auxiliary unit between the connection of the frame to the tractor and the additional axle.

Such a tractor is known from GB-A-2116924.

In the case of this known tractor the auxiliary unit is provided in the centre of the front side with a downward projecting pin for the connection of the auxiliary unit to the tractor. It can be deduced from Figs. 5a and 5b of GB-A-2116924 that the auxiliary unit is connected to the tractor by means of a fifth wheel plate mounted on the chassis of the tractor. The fifth wheel plate mounted on the auxiliary unit is situated approximately midway between the connection to the tractor and the additional axle.

The known tractor has the disadvantage that the fifth wheel plate on the auxiliary unit is situated higher up than the conventional fifth wheel plate mounted on the chassis of the tractor.

The object of the invention is to provide a tractor for a tractor/semi-trailer combination which does not have the abovementioned disadvantage.

This object is achieved with a tractor of the type mentioned at the beginning, which is characterized in that the frame of the auxiliary unit is directly hinged at the front to the chassis of the tractor by means of a hinge connection with a hinge pin extending in the transverse direction of the tractor.

With the design according to the invention, it can be ensured that the height of the fifth wheel plate on the auxiliary unit is substantially equal to the height of a conventional fifth wheel plate mounted on the chassis of the tractor.

Preferred embodiments of the tractor according to the invention are described in the dependent claims.

The invention also relates to an auxiliary unit with an additional axle for a tractor according to the invention.

The invention will be explained in greater detail in the following description of a preferred embodiment of a tractor according to the invention with reference to the drawing, in which:
Fig. 1 shows very diagrammatically and in side view a preferred embodiment of a tractor according to the invention;
Fig. 2 shows on an enlarged scale the rear part of the tractor of Fig. 1; and
Fig. 3 is a top view of the rear part of the tractor of Fig. 1 shown in Fig. 2.

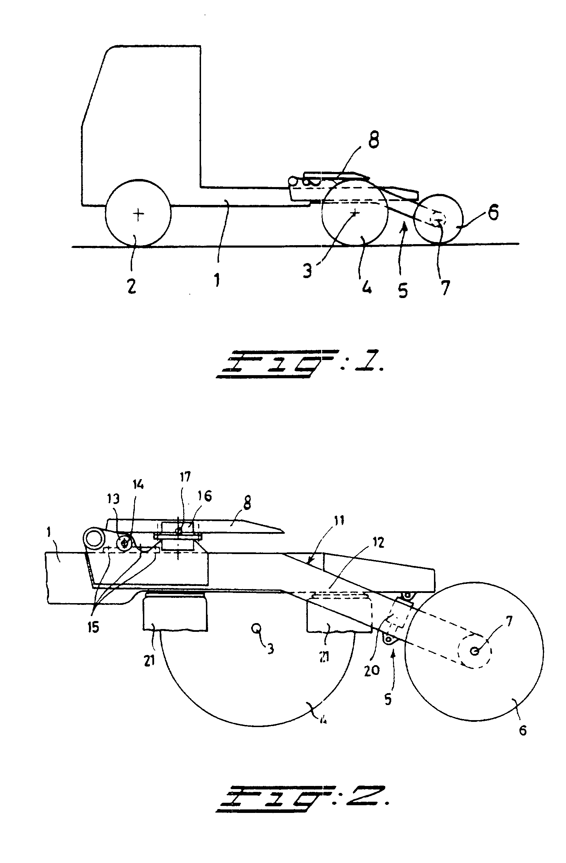

A preferred embodiment of a tractor for a tractor/semi-trailer combination according to the invention is shown very diagrammatically and in side view in Fig. 1. The tractor comprises a chassis 1, front wheels 2, and rear wheels 4 mounted on a rear axle 3. The tractor further comprises an auxiliary unit 5 fitted at the rear of the tractor and coupled to the chassis 1, which auxiliary unit has an additional axle 7 provided with wheels 6 for increasing the bearing capacity of the tractor. A fifth wheel plate 8 is mounted on the auxiliary unit 5.

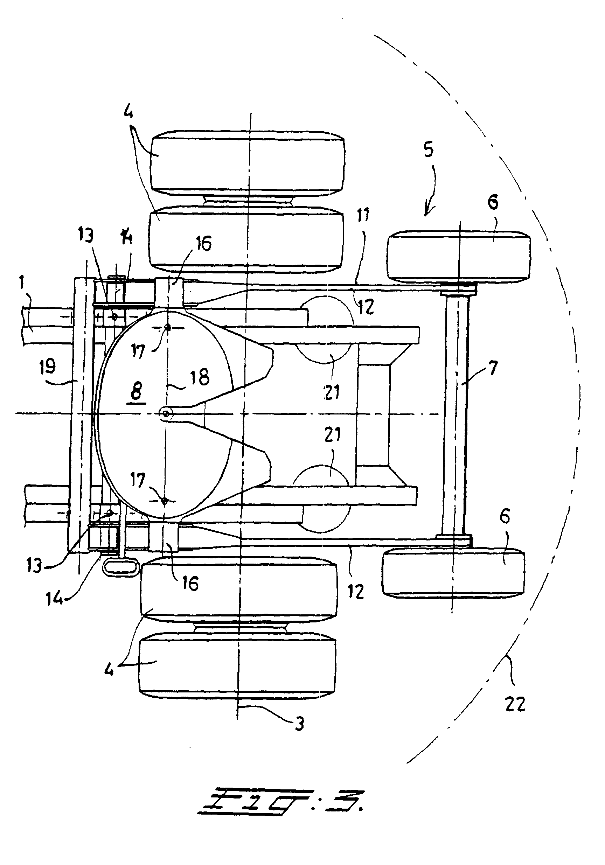

The rear part of the tractor and the auxiliary unit coupled thereto are shown in greater detail in Figs. 2 and 3. The auxiliary unit 5 comprises a frame 11 which has two longitudinal bars 12 extending in the longitudinal direction of the tractor and on either side of the chassis 1. At the front, the frame 11 is hinged to the chassis 1 of the tractor by means of two hinges 13 with a hinge pin 14 extending in the transverse direction of the tractor.

Each hinge 13 is fitted between a longitudinal bar 12 of the frame 11 of the auxiliary unit 5 and the chassis 1. The hinges 13 are fixed on the chassis 1 in standard fixing points 15 for a fifth wheel plate on the chassis 1, or said hinges constitute a fixed hinge structure for a conventional fifth wheel plate which is not mounted on the chassis in this case. In view of the statutory provisions, the distance between the rear axle 3 of the tractor and the additional axle 7 is at least 1 metre. In order to ensure that the auxiliary unit 5 takes up as little space as possible at the rear of the tractor, the abovementioned distance will be only a little greater than 1 metre in practice. The semi-trailer, in particular the position of the supporting feet, does not have to be adapted in that case. For this purpose, the auxiliary unit 5 with wheels 6 must remain inside the area bounded by the circle segment 22 (see Fig. 3). The radius of this circle segment is determined by the position of the supporting feet.

The fifth wheel plate 8, which can be a standard fifth wheel plate, is mounted on the longitudinal bars 12 of the frame 11 by means of supporting elements 16 fixed on the longitudinal bars 12. As is customary, the fifth wheel plate 8 is rotatable at hinge points 17 about an axis of rotation 18 extending in the transverse direction of the tractor. The fifth wheel plate 8 is mounted in such a position on the frame 11 that the fifth wheel plate 8 is situated between the hinges 13 and the rear axle 3 of the tractor.

In order to reduce, inter alia, the torsion movements of the longitudinal bars 12 as a result of the forces which act upon them and are introduced by way of the hinge points 13 and 17 of the longitudinal bars and the fifth wheel plate respectively, the longitudinal bars 12 are rigidly connected to each other at the front by means of a transverse bar 19.

One or more shock absorbers 20 can be fitted between the frame 11 and the chassis 1, in order to cushion the movements of the frame 11 relative to the chassis 1. A lifting unit (not shown here) can also be fitted between the frame 11 and the chassis 1, in order to lift the frame 11 when the additional bearing capacity supplied by the auxiliary unit 5 is not needed. The wear on the tyres of the wheels 4 and 6 is reduced in that case.

In Figs. 2 and 3 air bellows 21 of a spring system for the wheels 4 are also shown diagrammatically.

With the auxiliary unit 5 according to the invention, the load (part of the weight of a semi-trailer) applied to the fifth wheel plate 8 is transmitted by way of the supporting elements 16, the front part of the longitudinal bars 12 of the frame 11 and the hinges 13 to the chassis 1 of the tractor and by way of the rear part of the longitudinal bars 12 to the wheels 6 of the additional axle 7, the selected ratio of the lever arms (distance between the supporting elements 16 and the hinges 13 or the axle 7) ensuring that the greater part of the load is transmitted to the chassis 1. The abovementioned positioning of the fifth wheel plate 8 between the hinges 13 and the rear axle 3 means that, for example, in a case in which the downward force exerted by a semi-trailer upon the fifth wheel plate 8 is 12.8 tonnes and the tractor has a dead weight of 7.2 tonnes the axle loads on the front axle (front wheels) 2, rear axle 3 and additional axle 7 can be 6.5 tonnes, 11.5 tonnes and 2 tonnes respectively. Of course, where a different load is applied, the axle loads can deviate from the above values, but the ratio of the axle loads, in particular the ratio between the axle loads on the rear axle 3 and the additional axle 7, will substantially correspond to the ratio specified above.

In the embodiment shown the wheels 6 of the auxiliary unit 5 are connected in an unsprung manner to the longitudinal bars 12 of the frame 11, which is also preferable. However, it is possible to fit a spring system between the wheels 6 and the longitudinal bars 12 of the frame 11. The wheels 6 of the auxiliary unit 5 can also be designed so that they are steerable.

In the case of certain embodiments of conventional fifth wheel plates mounted on the chassis of the tractor it is possible to adjust the height of the hinge point of the fifth wheel plate. This adjustment facility can also be built in when the fifth wheel plate is being mounted on the frame of the auxiliary unit.

With the tractor according to the invention, the bearing capacity is increased by means of a relatively simple auxiliary unit, the fifth wheel plate being situated substantially at the same height as in the case of a conventional fifth wheel plate mounted on the chassis. The auxiliary unit can also be mounted in a relatively simple manner on an existing tractor by removing the conventional fifth wheel plate and fixing the hinges of the auxiliary unit in the standard fixing points of a fifth wheel plate on the chassis of the tractor. Advantageous axle load ratios can be achieved by the positioning of the plate.

A particular embodiment of a tractor with additional axles has been described above. Other embodiments are also possible within the scope of the invention as defined by the claims.

The frame of the auxiliary unit could also extend between the longitudinal bars of the chassis 1, provided that there is sufficient space there. In that case the frame could be hinged to the chassis 1 by means of a hinge situated in the central region of the chassis 1.

It is not necessary for the additional axle 7 to bear two wheels 6. In certain cases only one additional wheel will also suffice, in view of the relatively low load on the additional axle.

## Claims

1. Tractor for a tractor/semi-trailer combination, comprising a chassis (1), front wheels (2), and rear wheels (4) mounted on a rear axle (3), and further comprising an auxiliary unit (5) which is fitted at the rear of the tractor and has an additional axle (7) provided with at least one wheel (6) for increasing the bearing capacity of the tractor, which auxiliary unit (5) comprises a frame (11) which extends in the longitudinal direction of the chassis, is connected to the tractor at the front and bears the additional axle (7) at the rear, a fifth wheel plate (8) being mounted on the frame (11) of the auxiliary unit (5) between the connection of the frame to the tractor and the additional axle (7), **characterized in that** the frame (11) of the auxiliary unit (5) is directly hinged at the front to the chassis (1) of the tractor by means of a hinge connection (13) with a hinge pin (14) extending in the transverse direction of the tractor.

2. Tractor according to claim 1, **characterized in that** the frame (11) of the auxiliary unit (5) is connected to the chassis (1) in standard fixing points (15) for a fifth wheel plate provided on the chassis.

3. Tractor according to claim 1 or 2, **characterized in that** the fifth wheel plate (8) is situated between the connection of the frame (11) of the auxiliary unit (5) to the chassis (1) and the rear axle (3) of the tractor.

4. Tractor according to one of claims 1-3, **characterized in that** the fifth wheel plate (8) is situated at substantially the same height as a fifth wheel plate mounted directly on the chassis (1) of the tractor.

5. Tractor according to claim 1, **characterized in that** the frame (11) of the auxiliary unit (5) comprises two longitudinal bars (12) extending in the longitudinal direction of the chassis (1) and each connected at the front to the chassis by means of a hinge (13) with a hinge pin (14) extending in the transverse direction of the tractor.

6. Tractor according to claim 5, **characterized in that** the longitudinal bars (12) of the frame (11) of the auxiliary unit (5) are rigidly connected to each other at the front by means of a transverse bar (19).

7. Tractor according to one of claims 1-6, **characterized in that** at least one shock absorber (20) is fitted between the frame (11) of the auxiliary unit (5) and the chassis (1) of the tractor.

8. Tractor according to one of claims 1-7, **characterized in that** a lifting unit (21) for lifting the auxiliary unit (5) is fitted between the frame (11) of the auxiliary unit (5) and the chassis (1) of the tractor.

9. Tractor according to one of claims 1-8, **characterized in that** the additional axle (7) is connected in an unsprung manner to the frame (11) of the auxiliary unit (5).

## Patentansprüche

1. Zugmaschine für eine Zugmaschinen/Sattelanhänger-Kombination, die ein Chassis (1), Vorderräder (2) und Hinterräder (4), die auf einer Hinterachse (3) angebracht sind, umfasst und des Weiteren eine Zusatzeinheit (5) umfasst, die an der Rückseite der Zugmaschine angebracht ist und eine zusätzliche Achse (7) aufweist, die mit wenigstens einem Rad (6) versehen ist, um die Tragfähigkeit der Zugmaschine zu erhöhen, wobei die Zusatzeinheit (5) einen Rahmen (11) umfasst, der sich in der Längsrichtung des Chassis erstreckt, mit der Zugmaschine an der Vorderseite verbunden ist und die zusätzliche Achse (7) an der Rückseite trägt, wobei eine Sattelkupplungsplatte (8) an dem Rahmen (11) der Zusatzeinheit (5) zwischen der Verbindung des Rahmens mit der Zugmaschine und der zusätzlichen Achse (7) angebracht ist, **dadurch gekennzeichnet, dass** der Rahmen (11) der Zusatzeinheit (5) direkt an der Vorderseite des Chassis (1) der Zugmaschine mittels einer Gelenkverbindung (13) mit einem Gelenkbolzen (14) angelenkt ist, der sich in der Querrichtung der Zugmaschine erstreckt.

2. Zugmaschine nach Anspruch 1, **dadurch gekennzeichnet, dass** der Rahmen (11) der Zusatzeinheit (5) mit dem Chassis (1) an Standard-Befestigungspunkten (15) für eine Sattelkupplungsplatte verbunden ist, die an dem Chassis vorhanden sind.

3. Zugmaschine nach Anspruch 1 oder 2, **dadurch gekennzeichnet, dass** sich die Sattelkupplungsplatte (8) zwischen der Verbindung des Rahmens (11) der Zusatzeinheit (5) mit dem Chassis (1) und der Hinterachse (3) der Zugmaschine befindet.

4. Zugmaschine nach einem der Ansprüche 1-3, **dadurch gekennzeichnet, dass** sich die Sattelkupplungsplatte (8) im Wesentlichen in derselben Höhe wie eine Sattelkupplungsplatte befindet, die direkt an dem Chassis (1) der Zugmaschine angebracht ist.

5. Zugmaschine nach Anspruch 1, **dadurch gekennzeichnet, dass** der Rahmen (11) der Zusatzeinheit (5) zwei Längsstangen (12) umfasst, die sich in der Längsrichtung des Chassis (1) erstrecken und an der Vorderseite mit dem Chassis jeweils mittels eines Gelenks (13) mit einem Gelenkbolzen (14) verbunden sind, der sich in der Querrichtung der Zugmaschine erstreckt.

6. Zugmaschine nach Anspruch 5, **dadurch gekennzeichnet, dass** die Längsstangen (12) des Rahmens (11) der Zusatzeinheit (5) an der Vorderseite mittels einer Querstange (19) starr miteinander verbunden sind.

7. Zugmaschine nach einem der Ansprüche 1-6, **dadurch gekennzeichnet, dass** wenigstens ein Stoßdämpfer (20) zwischen dem Rahmen (11) der Zusatzeinheit (5) und dem Chassis (1) der Zugmaschine angebracht ist.

8. Zugmaschine nach einem der Ansprüche 1-7, **dadurch gekennzeichnet, dass** eine Hebeeinheit (21) zum Anheben der Zusatzeinheit (5) zwischen dem Rahmen (11) der Zusatzeinheit (5) und dem Chassis (1) der Zugmaschine angebracht ist.

9. Zugmaschine nach einem der Ansprüche 1-8, **dadurch gekennzeichnet, dass** die zusätzliche Achse (7) ungefedert mit dem Rahmen (11) der Zusatzeinheit (5) verbunden ist.

## Revendications

1. Tracteur pour un ensemble tracteur/semi-remorque, comprenant un châssis (1), des roues avants (2) et des roues arrières (4), montées sur un essieu arrière (4), et comprenant en outre une unité auxiliaire (5) montée à l'arrière du tracteur et comportant un essieu additionnel (7) muni d'au moins une roue (6) pour augmenter la capacité de portance du tracteur, l'unité auxiliaire (5) comprenant un cadre (11), s'étendant dans la direction longitudinale du châssis, est connecté au tracteur à l'avant et porte l'essieu additionnel (7) à l'arrière, une plaque de cinquième roue (8) étant montée sur le cadre (11) de l'unité auxiliaire (5) entre la connexion du cadre au tracteur et l'essieu additionnel (7), **caractérisé en ce que** le cadre (11) de l'unité auxiliaire (5) est directement articulé à l'avant du châssis (1) du tracteur à l'aide d'une connexion par charnière (13) munie d'une broche de charnière (14) s'étendant dans la direction transversale du tracteur.

2. Tracteur selon la revendication 1, **caractérisé en ce que** le cadre (11) de l'unité auxiliaire (5) est relié au châssis (1) à des points de fixation (15) standards pour une plaque à cinquième roue prévue sur le châssis.

3. Tracteur selon la revendication 1 ou 2, **caractérisé en ce que** la plaque de cinquième roue (8) est placée entre la connexion du cadre (11) de l'unité auxiliaire (5) au châssis (1) et à l'essieu arrière (3) du tracteur.

4. Tracteur selon l'une quelconque des revendications 1 à 3, **caractérisé en ce que** la plaque de cinquième roue (8) est placée sensiblement à la même hauteur que la plaque de cinquième roue montée directement sur le châssis (1) du tracteur.

5. Tracteur selon la revendication 1, **caractérisé en ce que** le cadre (11) de l'unité auxiliaire (5) comprend deux barres longitudinales (12) s'étendant dans la direction longitudinale du châssis (1) et chacune étant connectée à l'avant du châssis par une charnière (13) avec une broche de charnière (14) s'étendant dans la direction transversale du tracteur.

6. Tracteur selon la revendication 5, **caractérisé en ce que** les barres longitudinales (12) du cadre (11) de l'unité auxiliaire (5) sont connectées rigidement l'une à l'autre à l'avant, au moyen d'une barre transversale (19).

7. Tracteur selon l'une des revendications 1 à 6, **caractérisé en ce qu'**au moins un amortisseur (20) est monté entre le cadre (11) de l'unité auxiliaire (5) et le châssis (1) du tracteur.

8. Tracteur selon l'une des revendications 1 à 7, **caractérisé en ce qu'**une unité de levage (2) devant lever l'unité auxiliaire (5) est montée entre le cadre (11) de l'unité auxiliaire (5) et le châssis (1) du tracteur.

9. Tracteur selon l'une des revendications 1 à 8, **caractérisé en ce que** l'essieu additionnel (7) est connecté de manière non suspendue au cadre (11) de l'unité auxiliaire (5).
